# EUROPEAN PATENT APPLICATION

(11) **EP 4 401 090 A1**
(43) Date of publication of application: **17.07.2024**
(21) Application number: 23151387.0
(22) Date of filing: 12.01.2023
(51) Int. Cl.: G21K 1/00, G06N 10/00

(54) **DEVICE FOR CONTROLLING TRAPPED IONS**

(71) Applicant: Infineon Technologies Austria AG, 9500 Villach (AT); Oxford Ionics Limited, Begbroke Science Park Begbroke OX5 1PF (GB)
(72) Inventor: ROESSLER, Clemens, 9500 Villach (AT); MATTHIESEN, Clemens, Kidlington, OX5 1GJ (GB); BALLANCE, Chris, Oxford, OX3 0HB (GB)
(74) Representative: Lambsdorff & Lange Patentanwälte Partnerschaft mbB

(57) **Abstract**

A micro-fabricated device (100, 200, 400) for controlling trapped ions (180) includes a substrate (120) of a dielectric material or a semiconductor material. A structured electrode layer is disposed above the substrate. The structured electrode layer (125) forms a plurality of electrodes of an ion trap configured to trap ions in a space above the structured electrode layer. The structured electrode layer includes a low phonon density of states layer, referred to as low-PDOS layer, the low-PDOS layer being of TiN or TiW or Ti or W and having a thickness of equal to or greater than 100 nm.

## Description

### Technical Field

This disclosure relates generally to the field of ion traps, and in particular to ion traps for quantum computing and methods of manufacturing such devices.

### Background

Trapped ions are one of the most promising candidates for use as qubits (quantum bits) in quantum computers since they can be trapped with long lifetimes in a scalable array by virtue of electromagnetic fields. Presently, the most advanced ion traps can control about 50 qubits individually and can maintain up to 16 qubits in a fully entangled state. Future quantum computers will need to increase the number of controllable qubits to more than 100 to outperform classical supercomputers. Further, the number of ions used for each qubit will in future be raised to about 6 to 100 ions in order to allow for more efficient error-correction during quantum computing.

As the number of ions increases, the requirements for device control and interference (e.g., crosstalk) suppression increase. For trapped-ion quantum computing reliable and predictable ion control is desirable. For example, unwanted motional heating of the ions is a challenge for reliable ion control. As an example, surface electrodes of the ion trap play a role in this regard. To minimize motional heating, it is desirable to keep intrinsic electric field noise from the surfaces as low as possible. In addition or as an alternative, the electrodes may have high electrical conductivity to handle high capacitive charging currents.

### Summary

According to an aspect of the disclosure, a micro-fabricated device for controlling trapped ions includes a substrate of a dielectric material or a semiconductor material. A structured electrode layer is disposed above the substrate. The structured electrode layer forms a plurality of electrodes of an ion trap configured to trap ions in a space above the structured electrode layer. The structured electrode layer includes a low phonon density of states layer, referred to as low-PDOS layer, the low-PDOS layer being of TiN or TiW or Ti or W and having a thickness of equal to or greater than 100 nm.

According to an aspect of the disclosure, a method of manufacturing a micro-fabricated device for controlling trapped ions comprises providing a substrate of a dielectric material or a semiconductor material. A structured electrode layer is formed above the substrate. The structured electrode layer forms a plurality of electrodes of an ion trap configured to trap ions in a space above the structured electrode layer. The structured electrode layer comprises a low phonon density of states layer, referred to as low-PDOS layer, the low-PDOS layer being of TiN or TiW or Ti or W and having a thickness of equal to or greater than 100 nm.

### Brief description of the drawings

The elements of the drawings are not necessarily to scale relative to each other. Like reference numerals designate corresponding similar parts. The features of the various illustrated examples can be combined unless they exclude each other and/or can be selectively omitted if not described to be necessarily required. Examples are depicted in the drawings and are exemplarily detailed in the description which follows.
Figure 1 is a schematic cross-sectional view of an exemplary device for controlling trapped ions.
Figure 2 is a schematic cross-sectional view of an exemplary device for controlling trapped ions having a multilayer micro-fabricated electrode structure.
Figure 3 is a top view of a substrate of an exemplary device for controlling trapped ions having a similar construction as the device for controlling trapped ions as shown in Figures 1 and 2.
Figure 4 is a schematic cross-sectional view of an exemplary device for controlling trapped ions having a multilayer micro-fabricated electrode structure and a further substrate disposed over and spaced apart from the substrate as shown in Figure 2.
Figure 5 is a schematic cross-sectional view of an example of detail D shown in Figures 2 and 4.
Figure 6 is a schematic cross-sectional view of another example of detail D shown in Figures 2 and 4.
Figure 7 is a schematic cross-sectional view of another example of detail D shown in Figures 2 and 4.
Figure 8 is a schematic cross-sectional view of still another example of detail D shown in Figures 2 and 4.
Figure 9 is a flowchart showing exemplary stages of a method of manufacturing a micro-fabricated device for controlling trapped ions.

### Detailed description

The words "over" or "on" or "beneath" with regard to a part, element or material layer formed or located or disposed or arranged or placed "over" or "on" or "beneath" a surface may be used herein to mean that the part, element or material layer be located (e.g. placed, formed, arranged, disposed, placed, etc.) "directly on" or "directly under", e.g. in direct contact with, the implied surface. The word "over" or "on" or "beneath" used with regard to a part, element or material layer formed or located or disposed or arranged or placed "over" or "on" or "beneath" a surface may, however, either be used herein to mean that the part, element or material layer be located (e.g. placed, formed, arranged, deposited, etc.) "indirectly on" or "indirectly under" the implied surface, with one or more additional parts, elements or layers being arranged between the implied surface and the part, element or material layer.

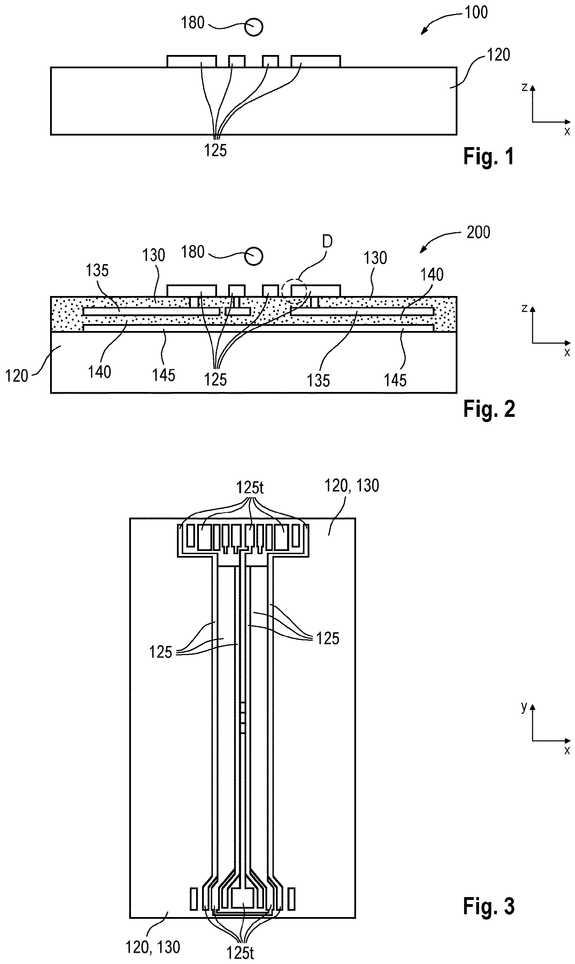

Referring to Figure 1, a device 100 for controlling trapped ions that may include a substrate 120 and a structured electrode layer 125 disposed over the substrate 120. The structured electrode layer 125 forms electrodes of an ion trap configured to trap one or a plurality of ions 180 in a space above the structured electrode layer 125 (only one ion 180 is illustrated in Figure 1 for ease of illustration).

The substrate 120 includes or is of a dielectric material or a semiconductor material. For example, the substrate 120 includes or is of sapphire or fused silica or quartz or silicon.

The location(s) of the ion(s) 180 can be controlled by virtue of electrical voltages applied to the structured electrode layer 125. For instance, the ion(s) 180 can be moved in the space in one or more lateral directions, e.g. in the X-direction or in the Y-direction (see e.g. Figure 3) or in any direction lying in a plane which is normal to the Z-direction by virtue of AC and DC voltages separately coupled to specific electrodes of the structured electrode layer 125. In some examples, it may also be possible to move the ion(s) 180 in the Z-direction, e.g., by changing electrode dimensions or voltages.

The structured electrode layer 125 and thus the electrodes of the ion trap(s) can be fabricated by micro-fabrication techniques. The substrate 120 may be substantially planar. The Z-direction may represent the height dimension of the device 100. The X-direction and the Y-direction are perpendicular to each other and define a plane in the width and length direction of the device 100, which is normal to the Z-direction.

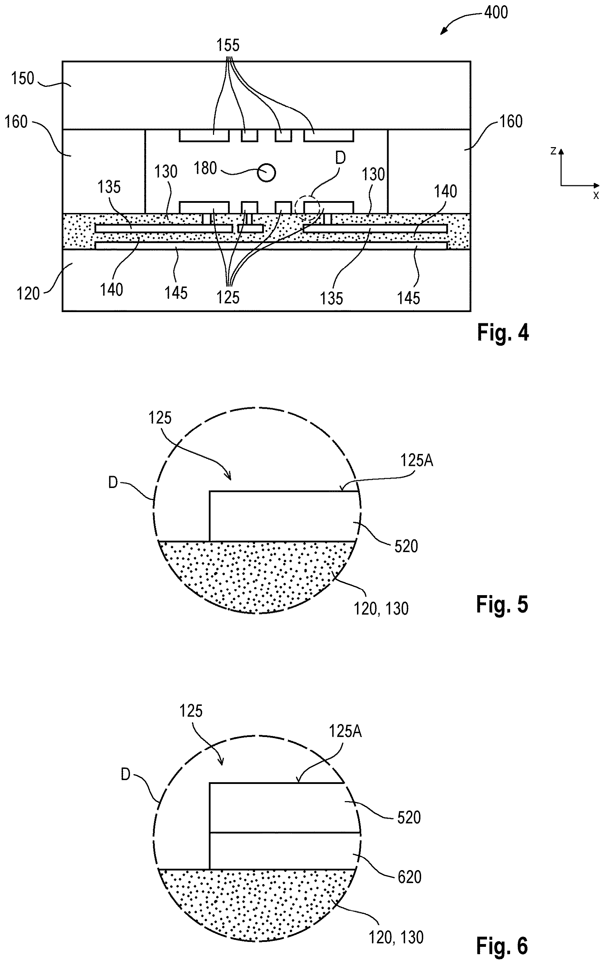

In Figure 1, the ion trap of the device 100 is exemplified to be designed as a so-called "surface-electrode" ion trap. In surface-electrode ion traps all electrodes (i.e. DC electrodes and RF electrodes) are contained in a single plane. Such two-dimensional (2D) ion trap geometries provide for high scalability. As will be described further below, in other examples the device 100 for controlling trapped ions may use three-dimensional (3D) ion trap geometry, see e.g. Figure 4.

In the examples disclosed herein the structured electrode layer 125 may include RF electrodes for RF trapping and DC electrodes for static electric-field trapping and/or for moving the ions 180 within the ion trap. An ion trap disclosed herein can trap many ions 180 that may be individually addressable and movable by appropriately controlling the potentials of the electrodes of the ion trap(s).

Referring to Figure 2, a device 200 for controlling trapped ions may have a multilayer micro-fabricated electrode structure. For instance, compared to the device 100, the device 200 may further comprise a structured metal layer 135 disposed over the substrate 120 and a dielectric layer 130 disposed over the structured metal layer 135 and disposed beneath the structured electrode layer 125. Further, the device 200 may, optionally, include more metal layers, e.g. a (structured or non-structured) further metal layer 145 disposed over the substrate 120 and separated from the structured metal layer 135 by a dielectric layer 140 disposed over the further metal layer 145 and beneath the structured metal layer 135.

The structured electrode layer 125 and the structured metal layer 135 may form a multilayer metal interconnect configured to electrically connect the electrodes of the structured electrode layer 125 to external circuitry. As shown in Figure 2, the structured metal layer 135 may be electrically connected to the (separate) electrodes of the structured electrode layer 125 by vias extending through the dielectric layer 130. That is, the structured metal layer 135 may, e.g., be structured as an electrical redistribution layer. This allows the formation of complex electrode structures and insular electrodes in the structured electrode layer 125. Further, a multilayer architecture of the device 200 for controlling trapped ions allows scalability of the device 200.

The further metal layer 145 may, e.g., be a continuous shielding layer. In other examples, the further metal layer 145 may also be a structured metal layer used, e.g., as an additional electrical redistribution layer contributing for implementing a two-level electrode interconnect structure.

In other examples, the order of the structured metal layer 135 and the further metal layer 145 may be interchanged, i.e. the structured metal layer 135 may be replaced by a continuous shielding layer and the further metal layer 145 may be formed as a structure metal layer serving as a wiring layer for the electrodes. In this case, the continuous shielding layer serves to shield the trap electrodes from the wiring layer. Still further, it is possible that the structured metal layer 135 is omitted so that the further metal layer 145 replaces the structured metal layer 135.

The dielectric layers 130, 140 may, e.g., be of an inorganic dielectric material such as, e.g., of silicon oxide and/or silicon nitride. They may be formed by micro-fabrication, e.g. by plasma-CVD (chemical vapor deposition) or, e.g., by thermal decomposition of tetraethyl orthosilicate (TEOS).

Figure 3 is a schematic top view of a simplified electrode layout formed by the structured electrode layer 125. A single electrode layer 125 (see, e.g., Figure 1) or a multilayer design (see, e.g., Figure 2) may be used. Some of the electrodes are formed as stripe electrodes, while other electrodes may be formed as insular electrodes of small lateral dimensions. Many different electrode layouts are known in the art and could be used in the examples disclosed herein. Further, the electrode layout provided by the structured electrode layer 125 may comprise Y-junctions and/or X-junctions (not shown).

Figure 3 illustrates terminal lands 125t of the structured electrode layer 125 available for electrically connecting the micro-fabricated electrode structure 125 including its RF and DC electrodes via connectors (not shown, e.g. wire bonds) to external circuitry (not shown). Other designs of electrical connections of the electrical interconnect (see e.g. Figure 2) are also feasible, and it is to be noted that the electrodes may, in other examples, not be connected to terminal lands 125t exposed at the substrate 120 but, e.g., to vias which directly connect to integrated circuitry (not shown) in the substrate 120.

Figure 4 illustrates a device 400 for controlling trapped ions which is implemented as a 3D ion trap. 3D ion trap geometries such as, e.g., linear Paul trap(s) distinguish over the surface-electrode trap geometries (see, e.g., Figures 1 and 2) by allowing substantially higher potential depths and higher trap frequencies. In the exemplary device 400 shown in Figure 4, the ion(s) 180 are trapped between the substrate 120 and a further substrate 150 disposed over and spaced apart from the substrate 120. One or a plurality of spacer members 160 may be disposed between the substrate 120 and the further substrate 150.

Ion traps disclosed herein may be linear traps in which RF trapping is used in two dimensions while static electric-field trapping is used in the third dimension.

The spacer members 160 define the spacing between the substrate 120 and the further substrate 150. The spacer members 160 may be bonded to the substrate 120 and/or to the further substrate 150 by wafer-bonding techniques. For instance, glass-bonding techniques or eutectic bonding techniques or anodic bonding techniques or thermocompression bonding techniques may be applied.

A structured top electrode layer 155 is disposed at a main side of the further substrate 150 opposite the structured electrode layer 125. The structured top electrode layer 155 forms electrodes of the (three-dimensional) ion trap. The ion trap is configured to trap ion(s) 180 in the space between the structured electrode layer 125 and the structured top electrode layer 155.

The structured top electrode layer 155 may also be formed by micro-fabrication techniques. Generally, micro-fabrication techniques for electrode formation and structuring may, e.g., involve photolithography methods (e.g. including photoresist application, patterning, etching) and/or deposition techniques (e.g. chemical vapor deposition (CVD), physical vapor deposition (PVD), sputtering) and/or plating techniques (e.g. electroless plating, galvanic plating) for applying dielectric layers 130, 140, metal layers 135, 145 and/or electrode layers 125, 155. Further, micro-fabrication techniques for electrode formation and structuring may include etching processes for structuring photoresist layers, dielectric layers 130, 140, metal layers 135, 145, and electrode layers 125, 155.

The structured top electrode layer 155 may be electrically connected to external circuitry by an electrical interconnect (not shown) which may be similar to the electrical interconnect described above in the context of the substrate 120. In this respect, reference is made to the above description to avoid reiteration.

The electrodes formed in the structured electrode layer 125 and/or the structured top electrode layer 155 may be structured with micrometer or sub-micrometer scale precision and alignment accuracy. This allows to achieve complex electrode layouts without loss of controllability of the trapped ions 180.

In devices 100, 200, 400 for controlling trapped ions 180, it is desirable to keep unwanted heating of ions 180 as low as possible. The term ion heating may also be referred to as motional heating. Ion heating can be described as an increase of the kinetic energy of an ion 180. In an example, such an increase of the kinetic energy of an ion 180 can be caused by the excitation of the ion's motional state by electric field fluctuations in the MHz-range emitted from the exposed surfaces of the ion trap, in particular including the electrode surfaces of the ion trap. In order to achieve a high quality of ion control and/or qubit operations, it is desirable to minimize heating effects (such as undesired movements of the ion(s) 180).

According to the disclosure, an electrically conductive low phonon density of states layer, referred to as low-PDOS layer, is included in the structured electrode layer(s) 125 and/or 155. This low-PDOS layer may lead to lower heating effects.

More specifically, using materials in one or more of the structured electrode layers 125, 155 with a low PDOS, such as, e.g., TiN or TiW or Ti or W, may reduce the attempt rate at which surface dipole transitions are excited. This may reduce surface electric field noise that can cause motional heating. By reducing surface electric field noise on one or more of the structured electrode layers 125, 155 motional heating of the ion 180 can be reduced.

In an embodiment, the low-PDOS layer integrated in the electrode layer (e.g. structured electrode layer 125 and/or structured top electrode layer 155) may have a thickness of equal to or greater than a PDOS thickness threshold of 100 nm. In other embodiments, the low-PDOS layer integrated in the electrode layer (e.g. structured electrode layer 125 and/or structured top electrode layer 155) may have a thickness of equal to or greater than a PDOS thickness threshold of 400 nm or 500 nm or 600 nm or 700 nm or 800 nm or 1µm.

Increasing the thickness of the low-PDOS layer may increase the "vibrational decoupling" effect of the low-PDOS layer from the substrate. In other words, increasing the thickness of the low-PDOS layer may reduce the number of phonons (such as the phonon density of states; PDOS) at the surface of the low-PDOS layer. For example, if the low-PDOS layer is thicker than a PDOS thickness threshold (such as 100nm or 400 nm or 500 nm or 600 nm or 700 nm or 800 nm or 1µm) the phonons in the PDOS layer may be independent of the phonons in the substrate 120 (and/or of the phonons in the dielectric layer 130). In other words, in case the low-PDOS layer is thicker than a PDOS thickness threshold (such as 100nm or 400 nm or 500 nm or 600 nm or 700 nm or 800 nm or 1µm), the PDOS of the low-PDOS layer may be independent or at least less influenced by the PDOS of the substrate below the low-PDOS layer. On the other hand, the PDOS of a thinner layer (i.e., a layer with a thickness that is smaller than the PDOS thickness threshold) may be dominated or influenced by the respective substrate's PDOS. A suitable PDOS thickness threshold of the low-PDOS layer may be greater than 100nm or 400 nm or 500 nm or 600 nm or 700 nm or 800 nm or 1µm.

A high velocity of sound cₛ translates to a low PDOS via PDOS ~ (1/cₛ)³. Hence, to improve efficiency, the (transversal) velocity of sound cₛ in the low-PDOS layer may, e.g., be greater than 3040 m/s. Sound velocities cₛ equal to or greater than 4100 m/s, 4300 m/s, 4500 m/s, 4700 m/s, 4900 m/s, and 5100 m/s are also possible, for example.

Table 1 indicates the (transversal) velocity of sound cₛ and the PDOS relative to copper (Cu) of various materials.

**Table 1**

| Material | cₛ (m/s) | relative PDOS |
|---|---|---|
| Cu | 2270 | 100% |
| Au | 1200 | 677% |
| Al | 3040 | 42% |
| TiN | 5400 | 7% |
| W | 2890 | 48% |
| Ti | 3125 | 38% |

Cu and Au are typical materials that are conventionally used as electrodes and/or surface materials of electrodes in a ion trap. As can be seen from the table TiN, W, Ti exhibit significantly lower PDOS than Cu or Au, for example. Among the materials shown in Table 1, the lowest PDOS of a metal material or material with metal-like behavior may be expected for TiN. As such in an embodiment, the material of the low-PDOS layer may be TiN. In one embodiment the low-PDOS layer being of TiN and having a thickness of equal to or greater than 400 nm.

Examples of various different layers or stacks configured to form the structured electrode layer 125 are shown in Figures 5 to 8. Figures 5 to 8 only show the lower electrode layer 125, but all examples also apply to the structured top electrode layer 155, for example.

Referring to Figures 5 and 6, the structured electrode layer 125 includes a low-PDOS layer 520. The low-PDOS layer 520 is disposed above the substrate 120 and, if existing, above the dielectric layer 130. The low-PDOS layer 520 may be the top layer of the structured electrode layer 125. That is, the low-PDOS layer 520 may provide for an exposed top surface 125A of the structured electrode layer 125.

In one example as shown in Figure 5, the low-PDOS layer 520 may be the sole layer of the structured electrode layer 125. That is, the structured electrode layer 125 may be made of the low-PDOS layer alone. In this case, the material of the low-PDOS layer 520 simultaneously serves to carry the relatively high currents of, e.g., up to 1A that can occur in the ion trap. In some examples, the currents can also be higher than 1A. In order to be able to realize this current-carrying capacity with as little heating as possible, the low-PDOS layer 520 may be particularly thick in the embodiment of Figure 5 (as mentioned above, this also improves the acoustic efficiency of the low-PDOS layer 520). For example, the low-PDOS layer 520 may have a thickness that is greater than the low-PDOS thickness threshold described above, i.e. a thickness that is greater than 100 nm or 400 nm or 500 nm or 600 nm or 700 nm or 800 nm or 1µm. In some embodiments the thickness of the low-PDOS layer 520 may be less than 2um. In other examples, the thickness of the low-PDOS layer 520 may also be higher than 2 um.

In another example as shown in Figure 6, the structured electrode layer 125 may further comprise a high conductivity metal layer 620 disposed between the substrate 120 and the low-PDOS layer 520. The high conductivity metal layer 620 may have a thickness in a range of 100 nm to 10 um, in particular 1 um to 2 um.

In an embodiment, the high conductivity metal layer 620 may comprise or be of a high conductivity metal having an electrical conductivity greater than the electrical conductivity of the material of the low-PDOS layer 520. In other examples, the conductivity metal layer may have the same electrical conductivity as the low-PDOS layer 520.

The high conductivity metal layer 620 may, e.g., be of or include an AlSiCu alloy or an AlCu alloy or Cu or Al. An exemplary AlSiCu alloy may have a chemical composition in percent by weight (%wt) of 98.5 %wt of Al, 1.0 %wt of Si and 0.5 %wt of Cu, balance incidental impurities, for example. An exemplary AlCu alloy may have a chemical composition in percent by weight of 99.5 %wt of Al and 0.5 %wt of Cu, balance incidental impurities, for example. In other examples, the metal material may be of Au or Ag, or may include or be of any combination of the above-mentioned materials.

The high conductivity metal layer 620 may, e.g., be structured in conformity with the low-PDOS layer 520. Al-based layers may be better suited for wet structuring, while Cu-based layers, which may have a higher electrical conductivity than Al-based layers, may require an additional structuring step.

The high conductivity metal layer 620 may have the function to carry relatively high charging currents, such as capacitive charging currents for RF electrodes. In other words, the high conductivity metal layer 620 may serve for minimizing dissipation/heating due to Ohmic losses during operation. If a high conductivity metal layer 620 is included in the structured electrode layer 125, the thickness of the low-PDOS layer 520 may be reduced compared to the example shown in Figure 5. For example, the low-PDOS layer may have a thickness between the low-PDOS thickness threshold (such as 100 nm or 400 nm or 500 nm or 600 nm or 700 nm or 800 nm or 1 um and 1.5 um). As discussed above, a minimum thickness of the low-PDOS layer (such as the low-PDOS thickness threshold) may ensure sufficient phonon attenuation from the substrate 120 (and/or the dielectric layer 130).

Referring back to Figure 5, if the high conductivity metal layer 620 is not present in the structured electrode layer 125, the low PDOS layer 520 should have an appropriate thickness to handle the electrode currents, e.g., 2-3 times as thick as an equivalent electrode made from Cu or Au.

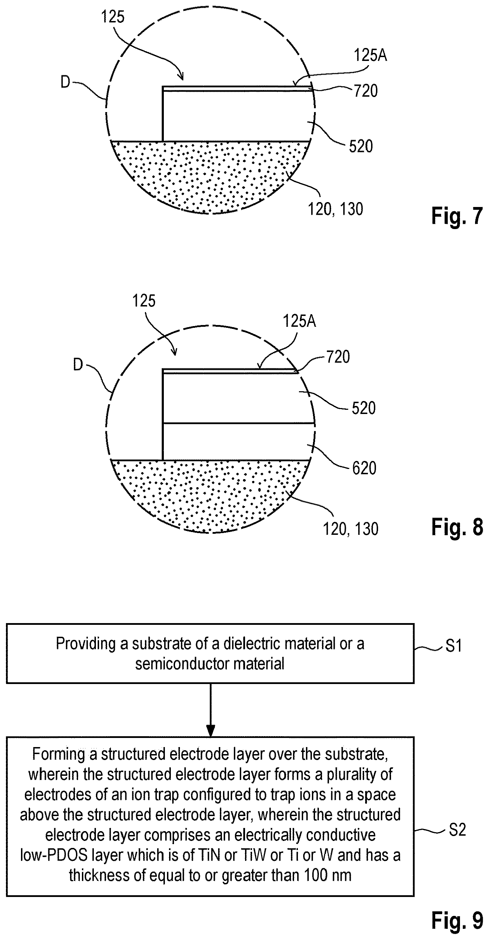

Referring to Figures 7 and 8, in other embodiments, the structured electrode layer 125 may include a top layer 720 of a noble metal disposed over the low-PDOS layer 520 or the high conductivity metal layer 620. In these embodiments, the top layer 720 may provide for the exposed surface 125A of the structured electrode layer 125. In other words, the top layer 720 may implement a finish coating of the structured electrode layer 125, e.g., for surface passivation. In some examples, the top layer 720 may be directly deposited on the low-PDOS layer 520.

The top layer 720 may have a thickness in a range of 5 nm to 40 nm, in particular 10 nm to 20 nm. The top layer 720 may be of Au, Pt, Pd or another noble (precious) metal material, for example. The noble metal material may reduce the deposition of impurities on the exposed surface 125A.

Figure 7 illustrates an example which is similar to the example of Figure 5, however, with the top layer 720 for surface passivation arranged over the low-PDOS layer 520. As such, the discussion above with regard to Figure 5 also applies to Figure 7.

Figure 8 illustrates an example which is similar to the example of Figure 6, however, with the top layer 720 for surface passivation arranged over the low-PDOS layer 520. As such, the discussion above with regard to Figure 6 also applies to Figure 8.

For example, the low-PDOS layer 520 may, e.g., comprise or be of TiN or TiW or Ti or W, or may include or be of any combination of these materials. Ti, W, and TiN are shown in table 1. TiW is an alloy based on Ti and W, which may show a similar velocity of sound cₛ and/or PDOS as compared to Ti and W. An exemplary chemical composition in percent by weight (%wt) is, e.g., 18 to 20 %wt of Ti, the balance W and incidental impurities.

All disclosure in connection with the structured electrode layer 125, in particular the layer stacks of Figures 5 to 8, may equally apply to the structured top electrode layer 155 400 shown in Figure 4, and reference is made to the above disclosure in order to avoid reiteration.

Figure 9 illustrate exemplary stages of a method of manufacturing a micro-fabricated device (e.g. devices 100, 200, 400) for controlling trapped ions. The method in particular refers to the formation of an electrode layer (e.g. structured electrode layer 125 and/or structured top electrode layer 155) of such device.

At S1, the method includes providing a substrate 120 of a dielectric material or a semiconductor material. The substrate may, e.g., be a wafer.

As described above, optionally a dielectric layer 130 may, e.g., be disposed on the upper surface of the substrate 120. Further, as illustrated in Figures 2 and 4, metal layers 135, 145 may be formed in the dielectric layer 130.

At S2 a structured electrode layer 125 is formed over the substrate 120, wherein the structured electrode layer 125 forms a plurality of electrodes of an ion trap configured to trap ions in a space above the structured electrode layer. The structured electrode layer 125 comprises an electrically conductive low phonon density of states layer, referred to as low-PDOS layer, the low-PDOS layer being of TiN or TiW or Ti or W and having a thickness of equal to or greater than 100 nm, 400 nm or 500 nm or 600 nm or 700 nm or 800 nm or 1 um.

### EXAMPLES

The following examples pertain to further aspects of the disclosure:

Example 1 is a micro-fabricated device for controlling trapped ions, the micro-fabricated device comprising: a substrate of a dielectric material or a semiconductor material; and a structured electrode layer disposed over the substrate, wherein the structured electrode layer forms a plurality of electrodes of an ion trap configured to trap ions in a space above the structured electrode layer. The structured electrode layer comprises a low phonon density of states layer, referred to as low-PDOS layer, the low-PDOS layer being of TiN or TiW or Ti or W and having a thickness of equal to or greater than 100 nm.

In Example 2, the subject matter of Example 1 can optionally include wherein the low-PDOS layer has a thickness of greater than 400 nm or 500 nm or 600 nm or 700 nm or 800 nm or 1µm.

In Example 3, the subject matter of Example 1 or 2 can optionally include wherein the velocity of sound in the low-PDOS layer is greater than 3040 m/s.

In Example 4, the subject matter of any of the preceding Examples can optionally include wherein the structured electrode layer further comprises a top layer of a noble metal disposed over the low-PDOS layer, the top layer having a thickness in a range of 5 nm to 40 nm, in particular 10 nm to 20 nm.

In Example 5, the subject matter of any of the preceding Examples can optionally include wherein the structured electrode layer further comprises a high conductivity metal layer disposed between the substrate and the low-PDOS layer, wherein the high conductivity metal layer has a thickness in a range of 100 nm to 2um, in particular 300 nm to 1000 nm, and the high conductivity metal layer comprises or is of a high conductivity metal having an electrical conductivity greater than the electrical conductivity of the material of the low-PDOS layer.

In Example 6, the subject matter of Example 5 can optionally include wherein the high conductivity metal layer comprises Al or AlSiCu or Cu.

In Example 7, the subject matter of Example 4 can optionally include wherein the structured electrode layer is made of the low-PDOS layer and the top layer alone.

In Example 8, the subject matter of any of any of Examples 1 to 3 can optionally include wherein the structured electrode layer is made of the low-PDOS layer alone.

In Example 9, the subject matter of any of the preceding Examples can optionally include wherein the substrate is of sapphire or fused silica or quartz or silicon.

Example 10 is a method of manufacturing a micro-fabricated device for controlling trapped ions, the method comprising: providing a substrate of a dielectric material or a semiconductor material; and forming a structured electrode layer over the substrate, wherein the structured electrode layer forms a plurality of electrodes of an ion trap configured to trap ions in a space above the structured electrode layer, wherein the structured electrode layer comprises an electrically conductive low phonon density of states layer, referred to as low-PDOS layer, the low-PDOS layer being of TiN or TiW or Ti or W and having a thickness of equal to or greater than 100 nm.

In Example 11, the subject matter of Example 10 can optionally further include forming a top layer of a noble metal over the low-PDOS layer, the top layer having a thickness in a range of 5 nm to 40 nm, in particular 10 nm to 20 nm.

In Example 13, the subject matter of Example 11 or 12 can optionally include wherein forming a high conductivity metal layer disposed between the substrate and the low-PDOS layer, wherein the high conductivity metal layer has a thickness in a range of 100 nm to 1500 nm, in particular 300 nm to 1000 nm, and the high conductivity metal layer comprises or is of a high conductivity metal having an electrical conductivity greater than the electrical conductivity of the material of the low-PDOS layer.

In Example 14, the subject matter of any of Examples 10 to 13 can optionally include wherein the structured electrode layer is formed by lithography including etching the low-PDOS layer.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

## Claims

1. A micro-fabricated device for controlling trapped ions, the micro-fabricated device comprising:
a substrate of a dielectric material or a semiconductor material; and
a structured electrode layer disposed above the substrate, wherein the structured electrode layer forms a plurality of electrodes of an ion trap configured to trap ions in a space above the structured electrode layer, wherein
the structured electrode layer comprises a low phonon density of states, low-PDOS, layer, the low-PDOS layer being of TiN or TiW or Ti or W and having a thickness of equal to or greater than 100 nm.

2. The micro-fabricated device of claim 1, wherein the low-PDOS layer has a thickness of greater than 400 nm or 500 nm or 600 nm or 700 nm or 800 nm or 1µm.

3. The micro-fabricated device of claim 1 or 2, wherein the velocity of sound in the low-PDOS layer is greater than 3040 m/s.

4. The micro-fabricated device of any of the preceding claims, wherein the structured electrode layer further comprises a top layer of an inert metal material disposed over the low-PDOS layer, the top layer having a thickness in the range of 5 nm to 40 nm, in particular 10 nm to 20 nm.

5. The micro-fabricated device of any of claims 1 to 4, wherein the structured electrode layer further comprises a high conductivity metal layer disposed between the substrate and the low-PDOS layer, the high conductivity layer having a thickness in the range of 100 nm to 10 µm, in particular 1 µm to 2 µm.

6. The micro-fabricated device of claim 5, wherein the high conductivity metal layer comprises Al or AlSiCu or Cu.

7. The micro-fabricated device of claim 4, wherein the structured electrode layer is made of the low-PDOS layer and the top layer alone.

8. The micro-fabricated device of claim 1 or 2, wherein the structured electrode layer is made of the low-PDOS layer alone.

9. The micro-fabricated device of any of the preceding claims, wherein the substrate is of sapphire or fused silica or silicon.

10. A method of manufacturing a micro-fabricated device for controlling trapped ions, the method comprising:
providing a substrate of a dielectric material or a semiconductor material; and
forming a structured electrode layer over the substrate, wherein the structured electrode layer forms a plurality of electrodes of an ion trap configured to trap ions in a space above the structured electrode layer, wherein
the structured electrode layer comprises a low phonon density of states, low-PDOS, layer, the low-PDOS layer being of TiN or TiW or Ti or W and having a thickness of equal to or greater than 100 nm.

11. The method of claim 9, further comprising:
forming a top layer of an inert metal material over the low-PDOS layer, the top layer having a thickness in the range of 5 nm to 40 nm, in particular 10 nm to 20 nm.

12. The method of claim 10, further comprising:
forming a high conductivity metal layer disposed between the substrate and the low-PDOS layer, the high conductivity layer having a thickness in the range of 100 nm to 10µm, in particular 1µm to 2um nm.

13. The method of any of claims 9 to 12, wherein the structured electrode layer is formed by lithography including etching the low-PDOS layer.
